# EUROPEAN PATENT APPLICATION

(11) **EP 4 497 679 A1**
(43) Date of publication of application: **29.01.2025**
(21) Application number: 24187872.7
(22) Date of filing: 10.07.2024
(51) Int. Cl.: B64C 25/42, B64D 45/08, B60T 8/17, B64C 25/46, G08G 5/00

(54) **METHOD OF BRAKING AIRCRAFT**

(30) Priority: 28.07.2023 GB 202311673
(71) Applicant: Airbus Operations Limited, Bristol BS34 7PA (GB); Airbus SAS, 31700 Blagnac Cedex (FR)
(72) Inventor: REID, David, Bristol, BS34 7PA (GB); SHARMA, Anurag, 31700 Blagnac (FR); HEBBORN, Andrew, Bristol, BS34 7PA (GB); HOWELL, George, Bristol, BS34 7PA (GB)
(74) Representative: Ribeiro, James Michael

(57) **Abstract**

A method of braking an aircraft. The method comprises: obtaining runway condition data (40) by inspecting a runway with a sensing system of the aircraft as the aircraft approaches the runway, either in flight or before a rejected take-off; analysing (41) the runway condition data to determine an expected performance profile (42); monitoring (44) a braking performance during braking of the aircraft; comparing the braking performance with the expected performance profile; and adjusting the braking of the aircraft in response to the comparison finding a deficit (46) in the braking performance relative to the expected performance profile.

## Description

### FIELD OF THE INVENTION

The present invention relates to a method of braking an aircraft, and an aircraft braking control apparatus configured to perform such a method.

### BACKGROUND OF THE INVENTION

US 10576948 discloses a method of performing aircraft braking based on a real time runway condition. In one example, during landing, real time data of a runway condition may be obtained using at least one sensor disposed around an aircraft. At least one brake factor may be determined based on the real time data of the runway condition. Aircraft braking may be controlled based on at least one brake factor.

### SUMMARY OF THE INVENTION

A first aspect of the invention provides a method of braking an aircraft, the method comprising: obtaining runway condition data by inspecting a runway with a sensing system of the aircraft; analysing the runway condition data to determine an expected performance profile; monitoring a braking performance during braking of the aircraft; comparing the braking performance with the expected performance profile; and adjusting the braking of the aircraft in response to the comparison finding a deficit in the braking performance relative to the expected performance profile.

Optionally adjusting the braking of the aircraft comprises adjusting an anti-skid function of the aircraft.

Optionally adjusting the anti-skid function of the aircraft comprises reconfiguring the anti-skid function of the aircraft, for instance by resetting a reference for an anti-skid algorithm to a preset value.

Optionally adjusting the anti-skid function of the aircraft comprises disabling or otherwise inhibiting the anti-skid function of the aircraft.

Optionally adjusting the braking of the aircraft comprises switching a braking control system of the aircraft to an emergency mode.

Optionally the method further comprises assessing whether the deficit in braking performance is critical for runway over-run; and selecting the adjustment of the braking performance on the basis of the assessment.

Optionally the expected performance profile comprises a threshold, comparing the braking performance with the expected performance profile comprises comparing the braking performance with the threshold; and finding a deficit in the braking performance comprises finding that the braking performance is below the threshold.

Optionally the expected performance profile comprises a deceleration threshold, comparing the braking performance with the expected performance profile comprises comparing a deceleration of the aircraft with the deceleration threshold; and finding a deficit in the braking performance comprises finding that the deceleration of the aircraft is below the deceleration threshold.

Optionally analysing the runway condition data to determine an expected performance profile comprises: identifying a runway condition category; and using the runway condition category to determine the expected performance profile.

Optionally the expected performance profile comprises a series of thresholds each associated with a different phase of the braking of the aircraft.

Optionally obtaining runway condition data comprises obtaining one or more images of the runway with the sensing system of the aircraft.

A further aspect of the invention provides aircraft braking control apparatus comprising: a sensing system configured to obtaining runway condition data by inspecting a runway; and a braking control system configured to: analyse the runway condition data to determine a performance threshold, monitor a braking performance during braking of the aircraft; compare the braking performance with the performance threshold, and adjust the braking of the aircraft in response to the braking performance falling below the performance threshold.

Optionally the sensing system comprises one or more cameras configured to obtain one or more images of the runway.

Optionally the braking control system is configured to adjust the braking of the aircraft by adjusting an anti-skid function of the aircraft, for instance by reconfiguring the anti-skid function of the aircraft, or by disabling or otherwise inhibiting the anti-skid function of the aircraft.

A further aspect of the invention provides an aircraft comprising aircraft braking control apparatus according to the preceding aspect.

Optionally the aircraft further comprises a braking system configured to brake the aircraft under control of the braking control system, wherein the braking control system is configured to adjust the braking applied by the braking system in response to the braking performance falling below the performance threshold.

### BRIEF DESCRIPTION OF THE DRAWINGS

Embodiments of the invention will now be described with reference to the accompanying drawings, in which:
Figure 1 shows an aircraft;
Figure 2 shows braking control apparatus of the aircraft; and
Figure 3 is a flow diagram showing a method of braking the aircraft.

### DETAILED DESCRIPTION OF EMBODIMENT(S)

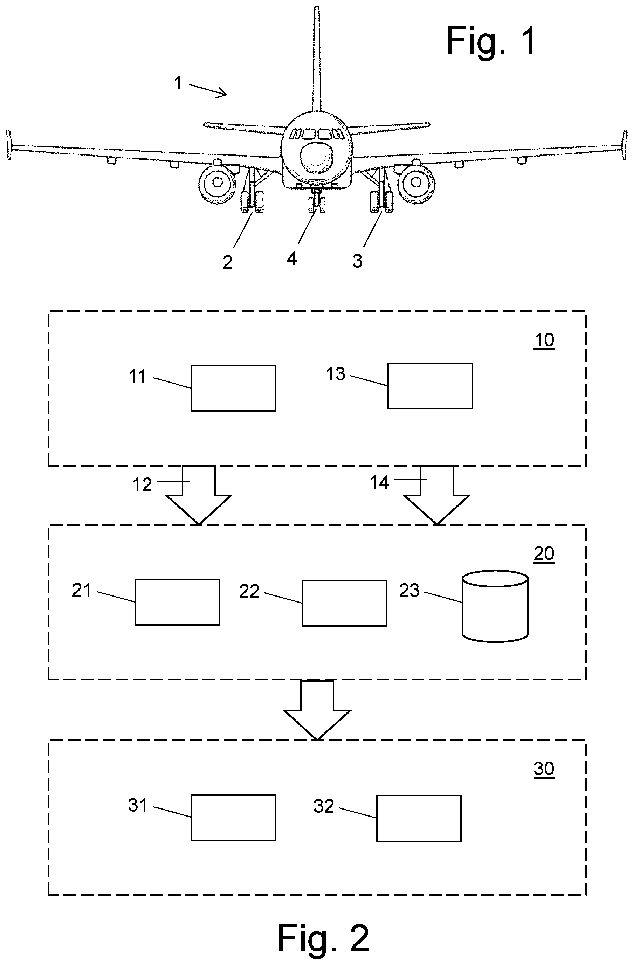

An aircraft 1 shown in Figure 1 comprises main gear 2, 3 and nose gear 4. A braking system 30 of the aircraft 1 is shown in Figure 2. The braking system 30 comprises brakes 31 which are configured to apply braking forces to the starboard main gear 2, and brakes 32 which are configured to apply braking forces to the port main gear 3.

The braking system 30 is controlled by a braking control system 20 also shown in Figure 2. The braking control system 20 comprises a processor 21, an anti-skid function 22, and a memory 23.

The anti-skid function 22 is configured to prevent the wheels from skidding, particularly on wet or icy runways. By way of example, the anti-skid function 22 may sense a rate of spin of a wheel to detect an impending skid and release the brake to prevent the skid from occurring. The anti-skid function 22 may be of any type, including but not limited to fully or quasi modulating to optimise the level of braking appropriate to the runway condition.

The apparatus of Figure 2 further comprises a sensing system 10 configured to obtaining real-time runway condition data 12 by inspecting a runway in front of the aircraft 1.

An example of a suitable sensing system 10 is given in US10576948B2, the contents of which are incorporated herein by reference. The sensing system 10 comprises at least one sensor 11. For example, the sensor 11 may be an imaging device such as a hyperspectral camera and/or a multispectral camera. The camera may include a field-of-view within which the runway can be monitored.

The sensing system 10 is also configured to monitor a braking performance of the aircraft 1, to obtain braking performance data 14. By way of example, the sensing system 10 may comprise an accelerometer 13 which measures deceleration of the aircraft to generate braking performance data 14 in the form of deceleration measurements. Other measures of braking performance, as well as deceleration measurements, may also be obtained by the sensing system 10.

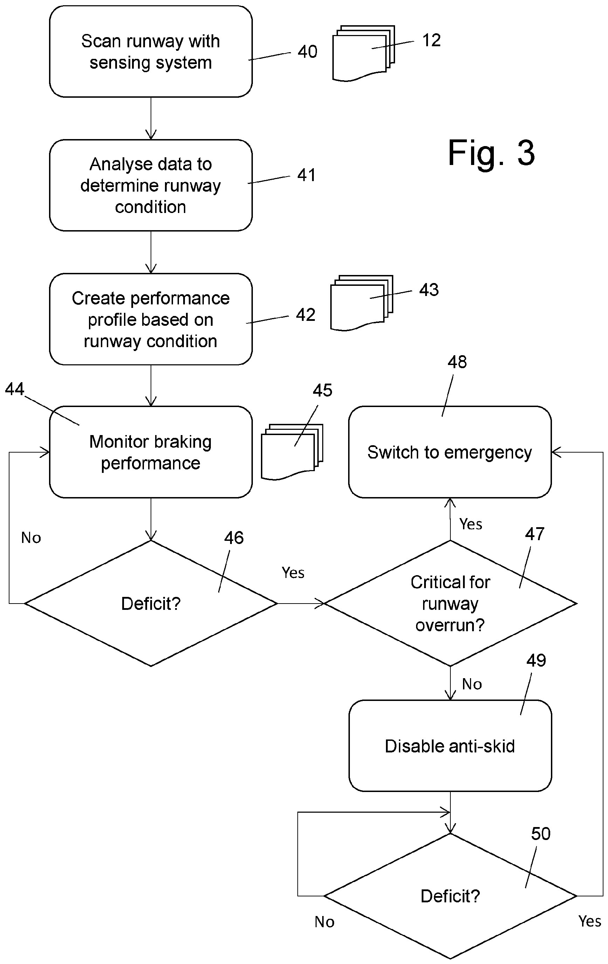

The processor 21 of the braking control system 20 may use any combination of hardware and software to implement the method shown in Figure 3.

In step 40, the sensing system 10 obtains runway condition data 12 by inspecting a runway: either in flight as the aircraft 1 approaches the runway, or on the ground such as before a rejected take-off or during landing.

As indicated in Figure 2, the runway condition data 12 (for instance one or more images of the runway) is communicated to the processor 21.

In step 41, the processor 21 analyses the runway condition data 12 to determine an expected performance profile 43 for a braking stop where anti-skid is activated which is stored in the memory 23. This is typically a two-stage process: firstly, identifying a runway condition category (such as: dry, wet, ice or contaminated); and secondly, using the runway condition category to determine the expected performance profile 43.

Note that step 41 in this example is performed by the braking control system 20, but in other embodiments it may be performed by the sensing system 10, split between the systems 10, 20, or performed elsewhere.

By way of example, the expected performance profile 43 may comprise a threshold, such as a deceleration threshold, which is an indication of an expected level of braking performance when anti-skid is activated.

This expected level of braking performance may take account of the runway condition. Hence if, for example, the runway condition category is "dry", then a high level of braking performance is expected so the deceleration threshold may be set to a high value. Alternatively, if the runway condition category is "wet", then a moderate level of braking performance is expected so the deceleration threshold may be set to a moderate value. Alternatively, if the runway condition category is "ice", then a low level of braking performance is expected so the deceleration threshold may be set to a low value.

These different deceleration thresholds may be due to different expected levels of application of anti-skid based on differences in the runway condition.

The expected performance profile 43 may comprise a single threshold, or a series of thresholds each associated with a different phase of the braking of the aircraft.

As the braking system 30 subsequently brakes the aircraft, the processor 21 of the braking control system 20 performs the further steps shown in Figure 3.

In step 44, the processor 21 monitors a braking performance during the braking of the aircraft. More specifically, the processor 21 compiles a braking performance profile 45 from the braking performance data 14.

In step 46 the processor 21 compares the braking performance with the expected performance profile (for example by comparing the braking performance profile 45 with the expected performance profile 43).

Taking a simple example of a braking performance profile 45 consisting of a single deceleration measurement, and an expected performance profile 43 consisting of a single deceleration threshold: in step 46 the processor 21 determines whether the deceleration measurement is below the deceleration threshold.

A deceleration measurement below the deceleration threshold may be indicative of a fault in the braking system 30. Importantly, the threshold takes into account the condition of the runway, which avoids giving a false indication of a fault in the braking system 30.

If the comparison in step 46 finds a deficit in the braking performance relative to the expected performance profile (for example if the deceleration measurement is below the deceleration threshold) then the processor 21 adjusts the braking of the aircraft in response to this finding.

First, in step 47 the processor 21 assesses whether the deficit in braking performance is critical for runway over-run.

The processor 21 then selects the adjustment of the braking performance on the basis of the assessment in step 47.

If the deficit is critical, then in step 48 the processor 21 switches the braking control system 20 to an emergency mode - for example a mode in which the pilot takes control of the braking system 30 rather than the automated control system 20.

If the deficit is not critical, then in step 49 the processor 20 disables, or otherwise inhibits, the anti-skid function 22.

In step 50 the processor 21 compares the braking performance again with the expected performance profile. If the comparison in step 50 still finds a deficit in the braking performance relative to the expected performance profile, then the processor 21 switches the braking control system 20 to the emergency mode in step 48.

Although not shown in Figure 3, optionally the processor 21 may alert the crew when a deficit is detected in step 46 and/or in step 47, for instance with a visual or audible alarm.

The automatic sanctions performed by the braking control system 20 in the event of a deficit may comprise: reconfiguring the anti-skid function, resetting the anti-skid function (for instance by resetting a reference for an anti-skid algorithm to a preset value or by resetting a braking command), disabling or otherwise inhibiting the anti-skid function (as in step 49 of Figure 3), switching to an emergency mode (as in step 48 of Figure 3); removing a braking demand from a location that is not providing adequate performance; or reconfiguring the braking control system 20 to a state where the performance will be improved. As noted above, the exact sanction and reason for activation may be alerted to the crew.

The process described above may replace the reliance on the perception of a pilot to manually detect when the braking system 30 is not achieving acceptable performance, and may allow automatic sanctions to be taken or the provision of crew alerts. This may result in improved braking performance and safety where there is a fault in the braking or anti-skid system. The process may also enable the use of single pilot operation by removing the task of the pilot having to monitor braking performance.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A method of braking an aircraft, the method comprising: obtaining runway condition data by inspecting a runway with a sensing system of the aircraft; analysing the runway condition data to determine an expected performance profile; monitoring a braking performance during braking of the aircraft; comparing the braking performance with the expected performance profile; and adjusting the braking of the aircraft in response to the comparison finding a deficit in the braking performance relative to the expected performance profile.

2. A method according to claim 1, wherein adjusting the braking of the aircraft comprises adjusting an anti-skid function of the aircraft.

3. A method according to claim 2, wherein adjusting the anti-skid function of the aircraft comprises reconfiguring the anti-skid function of the aircraft.

4. A method according to claim 2 or 3, wherein adjusting the anti-skid function of the aircraft comprises disabling or otherwise inhibiting the anti-skid function of the aircraft.

5. A method according to any preceding claim, wherein adjusting the braking of the aircraft comprises switching a braking control system of the aircraft to an emergency mode.

6. A method according to any preceding claim, further comprising assessing whether the deficit in braking performance is critical for runway over-run; and selecting the adjustment of the braking performance on the basis of the assessment.

7. A method according to any preceding claim, wherein the expected performance profile comprises a threshold, comparing the braking performance with the expected performance profile comprises comparing the braking performance with the threshold; and finding a deficit in the braking performance comprises finding that the braking performance is below the threshold.

8. A method according to any preceding claim, wherein the expected performance profile comprises a deceleration threshold; comparing the braking performance with the expected performance profile comprises comparing a deceleration of the aircraft with the deceleration threshold; and finding a deficit in the braking performance comprises finding that the deceleration of the aircraft is below the deceleration threshold.

9. A method according to any preceding claim, wherein analysing the runway condition data to determine an expected performance profile comprises: identifying a runway condition category; and using the runway condition category to determine the expected performance profile.

10. A method according to any preceding claim, wherein the expected performance profile comprises a series of thresholds each associated with a different phase of the braking of the aircraft.

11. A method according to any preceding claim, wherein obtaining runway condition data comprises obtaining one or more images of the runway with the sensing system of the aircraft.

12. Aircraft braking control apparatus comprising: a sensing system configured to obtaining runway condition data by inspecting a runway; and a braking control system configured to: analyse the runway condition data to determine a performance threshold, monitor a braking performance during braking of the aircraft, compare the braking performance with the performance threshold, and adjust the braking of the aircraft in response to the braking performance falling below the performance threshold.

13. Aircraft braking control apparatus according to claim 12, wherein the sensing system comprises one or more cameras configured to obtain one or more images of the runway.

14. An aircraft comprising aircraft braking control apparatus according to claim 12 or claim 13.

15. An aircraft according to claim 14, further comprising a braking system configured to brake the aircraft under control of the braking control system, wherein the braking control system is configured to adjust the braking applied by the braking system in response to the braking performance falling below the performance threshold.
